# EUROPEAN PATENT SPECIFICATION

(11) **EP 2 546 126 B1**
(45) Date of publication and mention of the grant of the patent: **15.04.2015**
(21) Application number: 12174819.8
(22) Date of filing: 03.07.2012
(51) Int. Cl.: B62J 13/04, B62K 25/28

(54) **A two-wheeled motor vehicle having a chain case**
Ein zweirädriges Kraftfahrzeug mit einem Kettenkasten
Un véhicule motorisé à deux roues équipé d'un carter de chaîne

(30) Priority: 12.07.2011 JP 2011153802
(43) Date of publication of application: 16.01.2013
(73) Proprietor: Yamaha Hatsudoki Kabushiki Kaisha, Iwata-shi, Shizuoka 438-8501 (JP)
(72) Inventor: Kobayashi, Yasunari, Shizuoka-ken, 438-8501 (JP); Ogata, Tomokazu, Shizuoka-ken, 438-8501 (JP)
(74) Representative: Stöckeler, Ferdinand

(56) References cited:
- EP-A2- 1 134 152
- CN-A- 101 734 319
- JP-A- 8 085 484
- JP-U- S5 788 689
- JP-U- 55 136 692
- JP-U- 58 004 486
- JP-U- 59 035 286

## Description

### BACKGROUND OF THE INVENTION

### (1) Field of the Invention

The present invention relates to a two-wheeled motor vehicle having a chain case for covering areas around a chain which transmits power of the two-wheeled motor vehicle to a rear wheel, and relates to a two-wheeled motor vehicle having such chain case.

### (2) Description of the Related Art

Conventionally, a two-wheeled motor vehicle has a chain case covering areas around a chain to protect the chain from dust, mud, and so on. This type of chain case of the two-wheeled motor vehicle, typically, is formed of an upper case and a lower case. See Japanese Unexamined Patent Publication H11-139376 (Fig. 2), for example. The chain case is vertically split into the upper case covering an upper part of the chain, and the lower case covering a lower part of the chain. It is adjacent axle mounts of the rear wheel that the upper case and the lower case are connected together in upper and lower positions.

However, the conventional example with such construction has the following drawback.

With the conventional apparatus, changing the rear wheel requires both of the upper case and lower case to be detached. This necessitates both of the upper case and lower case to be attached again after a rear wheel is attached, which poses a problem of making the rear wheel changing operation very cumbersome.

JP 8 085484 A discloses a chain case comprising an inner chain case and an outer chain case according to the preamble of claim 1.

### SUMMARY OF THE INVENTION

The present invention has been made having regard to the state of the art noted above, and its object is to provide a two-wheeled motor vehicle having a chain case having a split construction devised to facilitate a rear wheel changing operation.

The above object is fulfilled, according to the present invention, by a two-wheeled motor vehicle according to claim 1.

According to the present invention, when changing the rear wheel, the operation can be carried out only by removing the outer chain case and the rear cutout, without removing the inner chain case, and without the driven sprocket attached to the rear wheel interfering with the inner chain case. When attaching the chain case to the two-wheeled motor vehicle, the operation can be carried out in the state of the front cutout of the inner chain case attached to the cross member of the swing arm. Therefore, the operations can be carried out efficiently to change the rear wheel easily with no need to support the inner chain case.

In the present invention, it is preferred that the front cutout has an opening height for holding an upper surface and a lower surface of the cross member in a pinching manner.

The front cutout has the opening height for fitting on the upper surface and lower surface of the cross member. Thus, the inner chain case can be held by the cross member in a way to pinch the latter.

In the present invention, it is preferred that, in connection with a sectional shape of the cross member including a fore and aft direction and a vertical direction of the two-wheeled motor vehicle, the front cutout engages a region of the cross member having a larger size in the fore and aft direction than in the vertical direction, and has a size in the fore and aft direction larger than the opening height.

The front cutout is elongated in the fore and aft direction in accordance with the sectional shape of the cross member. Therefore, the inner chain case can stably be held by the cross member when the latter is pinched by the inner chain case.

In the present invention, it is preferred that the front cutout has edges formed on a side surface of the inner chain case along the upper surface and the lower surface of the cross member; and the edges have a size in the transverse direction larger than a wall thickness of the side surface of the inner chain case.

The edges of the front cutout have a wall thickness in the transverse direction of the vehicle body larger than the wall thickness of the lateral side. Therefore, the inner chain case can be attached stably to the cross member.

In the present invention, it is preferred that the edges project only toward the outer chain case.

The edges projecting only to one side are easy to manufacture.

In the present invention, it is preferred that the edges have a size in the vertical direction larger than the wall thickness of the side surface of the inner chain case.

The edges of the front cutout have a size in the vertical direction larger than the wall thickness of the side surface. Therefore, the edges have increased rigidity, whereby the inner chain case can be attached stably to the cross member.

In the present invention, it is preferred that the front cutout has a guide having a large forward end and tapering toward the opening height.

With the guide, the front cutout of the inner chain case can easily fit onto the cross member. This improves working efficiency in attaching the inner chain case.

In the present invention, it is preferred that the inner chain case has an opening formed in a rear portion thereof for avoiding interference with the rear wheel, and the rear cutout has a lower cutout formed to extend a large extent forward from the opening.

The rear wheel of a two-wheeled motor vehicle is constructed such that, when the chain has become extended, the axle of the rear wheel is moved in the fore and aft direction so that a slack of the chain can be adjusted with a chain adjuster to be at a tolerance level. That is, the axle of the rear wheel can move fore and aft through rear-wheel mounts corresponding to the rear ends of the left arm portion and right arm portion. Therefore, when such operation is carried out, as when changing the rear wheel, a large working space is required for moving the rear wheel in the fore and aft direction of the swing arm. Such large working space is secured since the rear cutout of the inner chain case extends a large extent forward of the opening. Therefore, operations can carried out efficiently for tightening the chain and for changing the rear wheel.

In the present invention, it is preferred that the outer chain case has a recess formed in a transversely outer surface thereof for avoiding interference with an on-board component disposed adjacent thereto.

The recess allows the on-board component to be allocated easily.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a perspective view showing an outward appearance of a chain case according to the present invention;
Fig. 2 is a perspective view showing an outward appearance of the chain case with an upper outer chain case removed;
Fig. 3 is a perspective view showing an outward appearance of the chain case with the upper outer chain case and a lower outer chain case removed;
Fig. 4 is a perspective view showing an outward appearance of the chain case with the outer chain cases removed and a rear plate being removed halfway from an inner chain case;
Fig. 5 is a perspective view showing an outward appearance of the chain case with the outer chain cases and rear plate removed;
Fig. 6 shows side views of the chain case assembled, in which Fig. 6A is a left side view, and Fig. 6B is a fragmentary right side view;
Fig. 7 shows views in vertical section of the chain case of Fig. 6, in which Fig. 7A is a section taken on line 101-101, Fig. 7B is a section taken on line 102-102, Fig. 7C is a section taken on line 103-103, and Fig. 7D is a section taken on line 104-104;
Fig. 8 shows the inner chain case, in which Fig. 8A is a plan view, and Fig. 8B is a right side view;
Fig. 9 shows the rear plate, in which Fig. 9A is a rear view, and Fig. 9B is a right side view;
Fig. 10 shows a connecting portion of the inner chain case, in which Fig. 10A is a side view, and Fig. 10B is a cross section;
Fig. 11 shows a lug of the inner chain case, in which Fig. 11A is a plan view, and Fig. 11B is a view in vertical section;
Fig. 12 shows the upper outer chain case, in which Fig. 12A is a plan view, and Fig. 12B is a left side view;
Fig. 13 shows the lower outer chain case, in which Fig. 13A is a left side, and Fig. 13B is a bottom view;
Fig. 14 is a left side view of a two-wheeled motor vehicle having the chain case according to the present invention; and
Fig. 15 is a left side view of the two-wheeled motor vehicle with the outer chain cases of the chain case removed.

### DESCRIPTION OF THE PREFERRED EMBODIMENTS

One embodiment of the present invention will be described hereinafter with reference to the drawings.

### <Chain case>

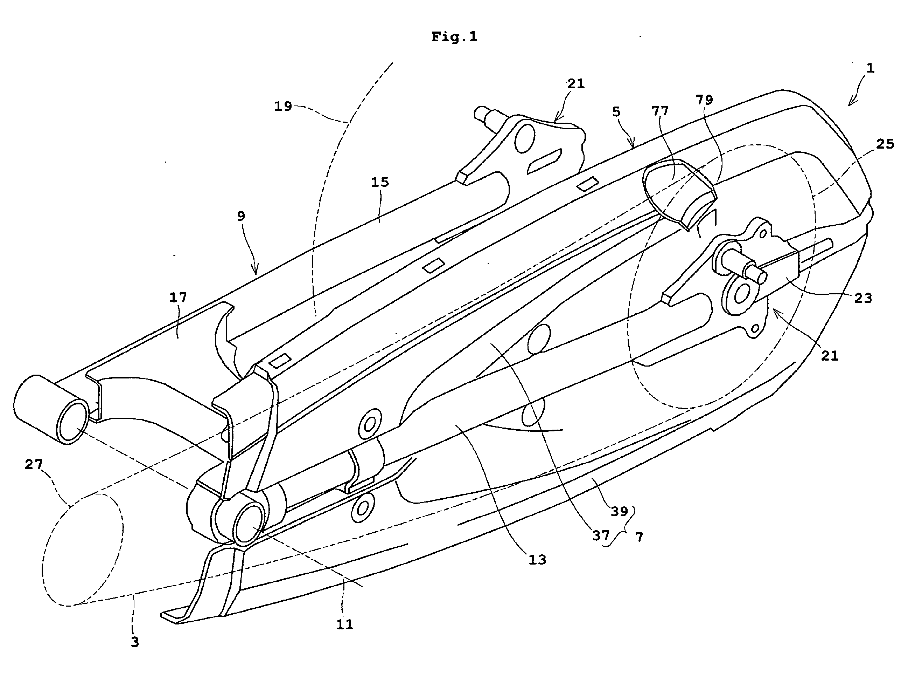

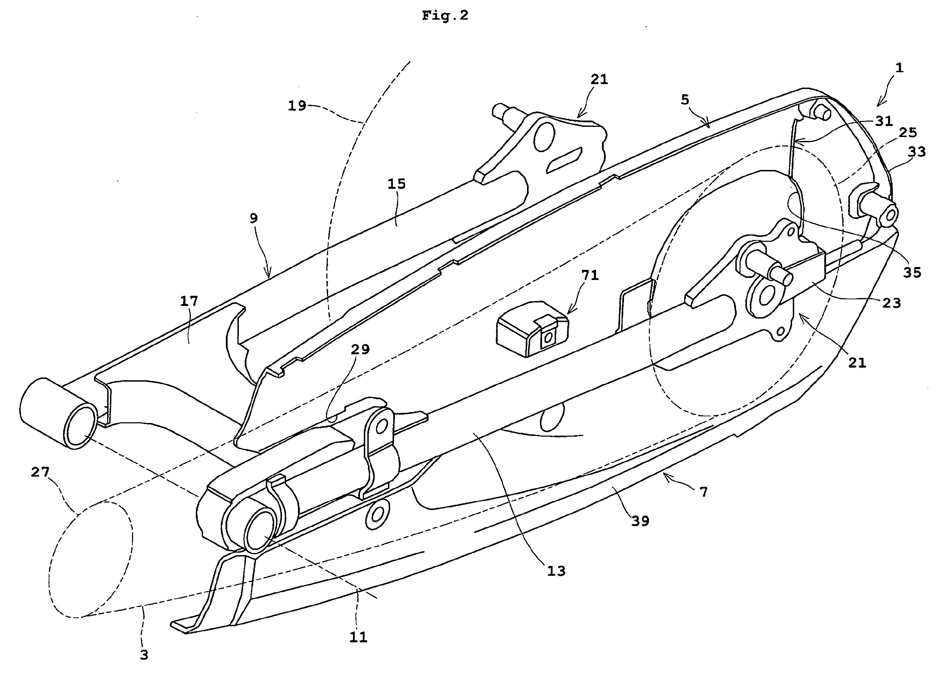

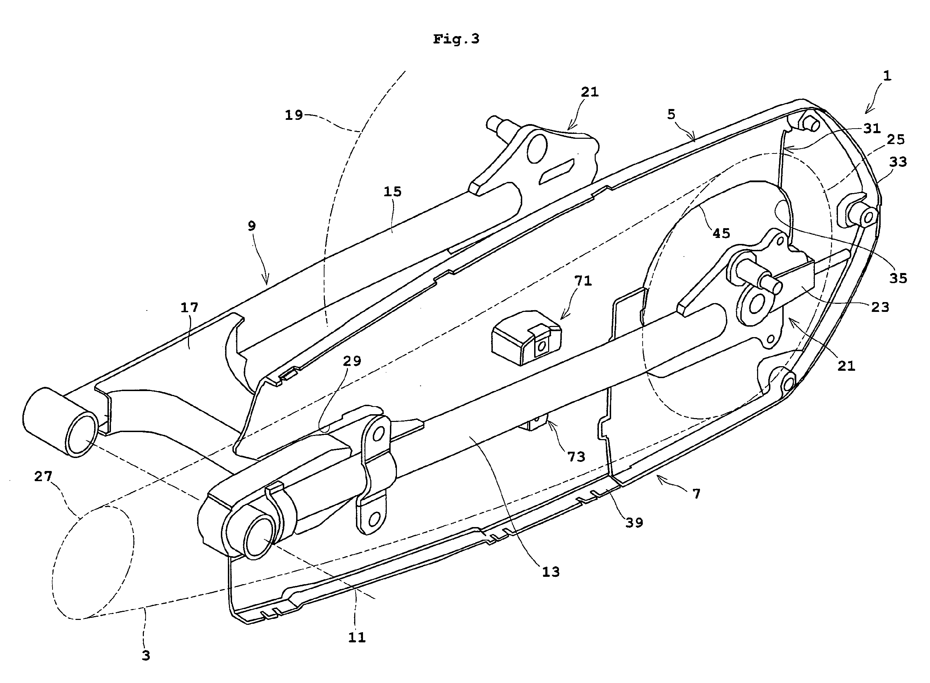

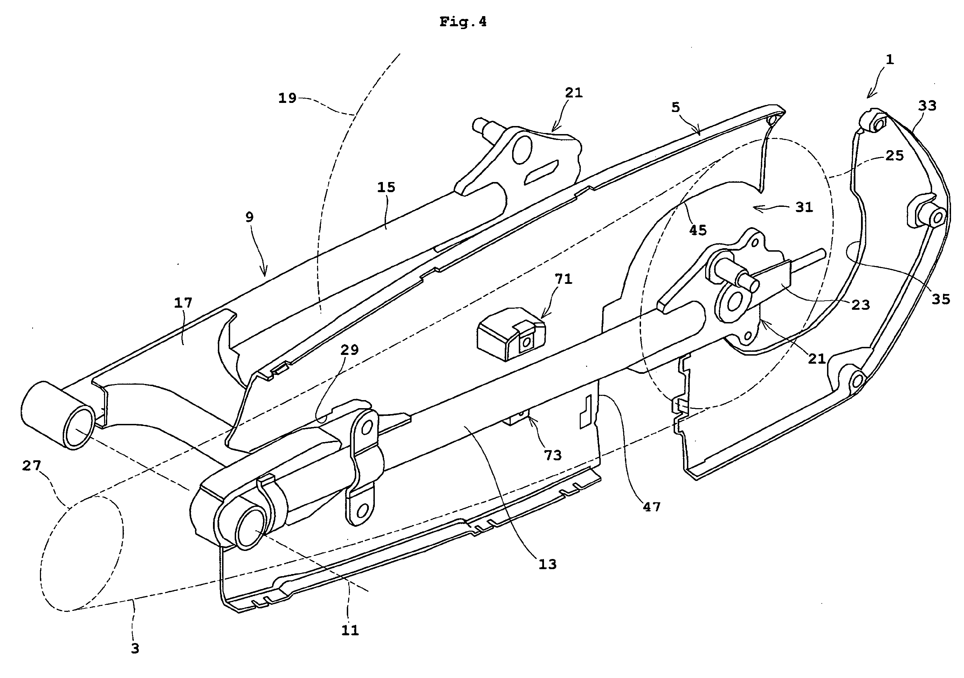

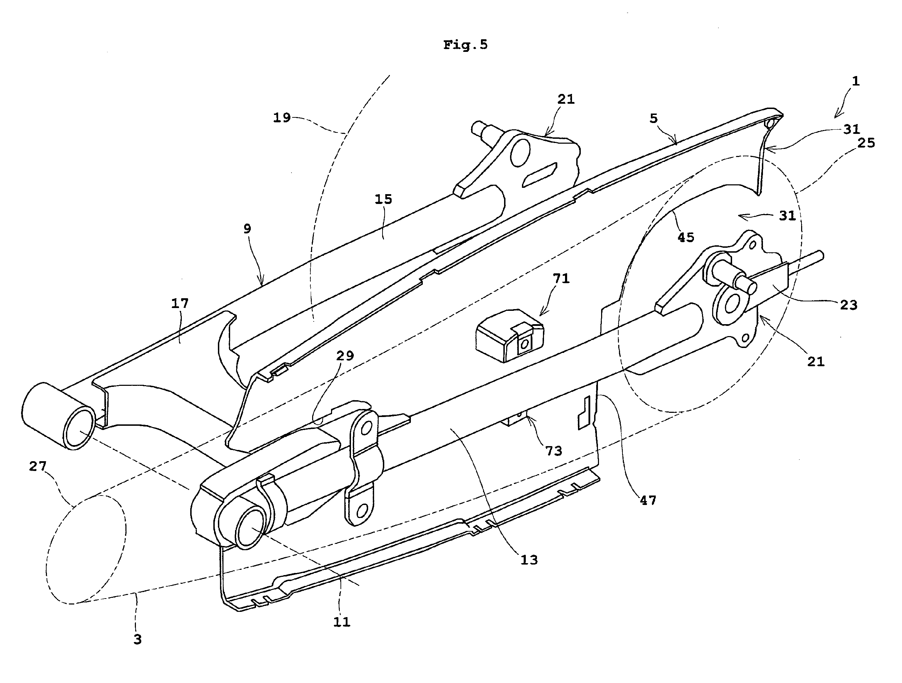

First, an outline construction of a chain case in this embodiment will be described with reference to Figs. 1 - 5. Fig. 1 is a perspective view showing an outward appearance of a chain case according to the present invention. Fig. 2 is a perspective view showing an outward appearance of the chain case with an upper outer chain case removed. Fig. 3 is a perspective view showing an outward appearance of the chain case with the upper outer chain case and a lower outer chain case removed. Fig. 4 is a perspective view showing an outward appearance of the chain case with the outer chain cases removed and a rear plate being removed halfway from an inner chain case. Fig. 5 is a perspective view showing an outward appearance of the chain case with the outer chain cases and rear plate removed.

A chain case 1 covers areas around a chain 3 which transmits power of a two-wheeled motor vehicle. The chain case 1 includes an inner chain case 5 and an outer chain case 7. The chain case 1 in this embodiment is designed for use on a two-wheeled motor vehicle, and is attached to a swing arm 9. The chain case 1 in this embodiment is made by resin forming, for example.

The swing arm 9 is attached to a pivot 11 to be swingable relative to a main frame of the two-wheeled motor vehicle not shown. The swing arm 9 has a left arm portion 13, a right arm portion 15, and a cross member 17.

The left arm portion 13 and right arm portion 15 have mounts 21 at rear ends thereof for attachment to a rear wheel 19 (rightward in Figs. 1 - 5). The mount 21 of the left arm portion 13 has a chain adjuster 23 attached thereto. The mounts 21 have an axle of the rear wheel 19, and rotatably support the rear wheel 19. The mounts 21 are constructed for allowing the rear wheel 19 to move along with the axle in a fore and aft direction (right and left in Fig. 1). Its movement is made by the chain adjuster 23.

The rear wheel 19 has a driven sprocket 25 disposed coaxially with the axle. A drive sprocket 27 of an engine, not shown, is disposed forward of the driven sprocket 25 and forward of the pivot 11. The above chain 3 is wound around the driven sprocket 25 and drive sprocket 27.

In this embodiment, the driven sprocket 25 is attached to the left side of the rear wheel 19, and therefore the chain 3 is located to the left in the transverse direction of the vehicle body. Thus, the chain case 1 is attached to the left arm portion 13 of the swing arm 9. In this example, the left arm portion 13 corresponds to the "chain-side arm portion" in the present invention. Depending on the two-wheeled motor vehicle, the driven sprocket 25 may be attached to the right in the transverse direction of the vehicle body. In that case, the chain case 1 will be attached to the right arm portion 15. Then, the right arm portion 15 will correspond to the "chain-side arm portion" in the present invention.

As shown in Figs. 3 and 4, the inner chain case 5 is attached transversely inward of the left arm portion 13, and has a front cutout 29 and a rear cutout 31. The rear cutout 31 has a rear plate 33. As described in detail hereinafter, the front cutout 29 is formed to fit the inner chain case 5 on the cross member 17 for support. The rear cutout 31 is formed by cutting off a lower rearward portion of the inner chain case 5 including the mount 21 of the right arm portion 15. The rear plate 33 has a mount cutout 35 formed to avoid interference with the mount 21, and is attached to the rear cutout 31.

As shown in Figs. 1 and 2, the outer chain case 7 is attached to the inner chain case 5 in a transversely inward direction, so as to cover the chain 3.

In this embodiment, a two-piece construction is employed for the outer chain case 7, which includes an upper outer chain case 37 and a lower outer chain case 39. The upper outer chain case 37 is disposed above the left arm portion 13, while the lower outer chain case 39 is disposed below the left arm portion 13. The term above and below the left arm portion 13 here means that these cases 37 and 39 are largely in such positions, and does not mean that they exist only in such positions.

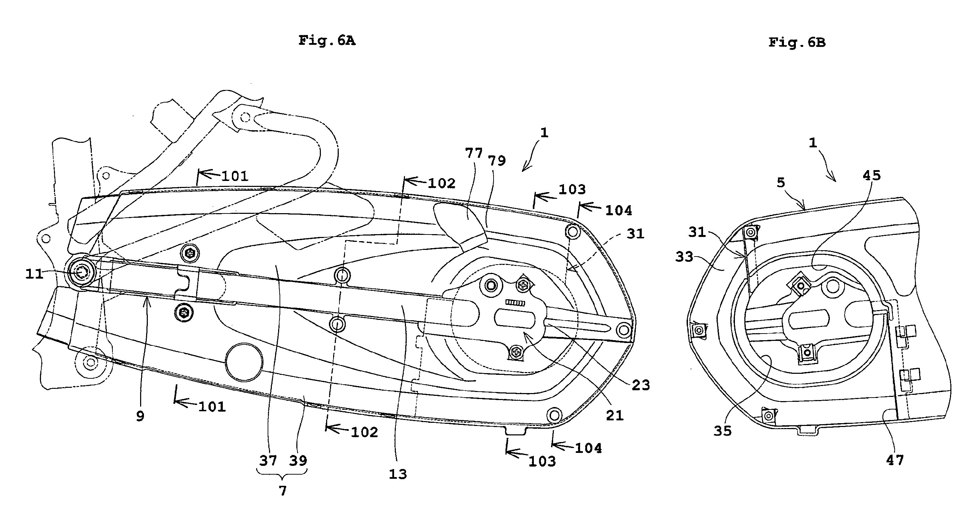

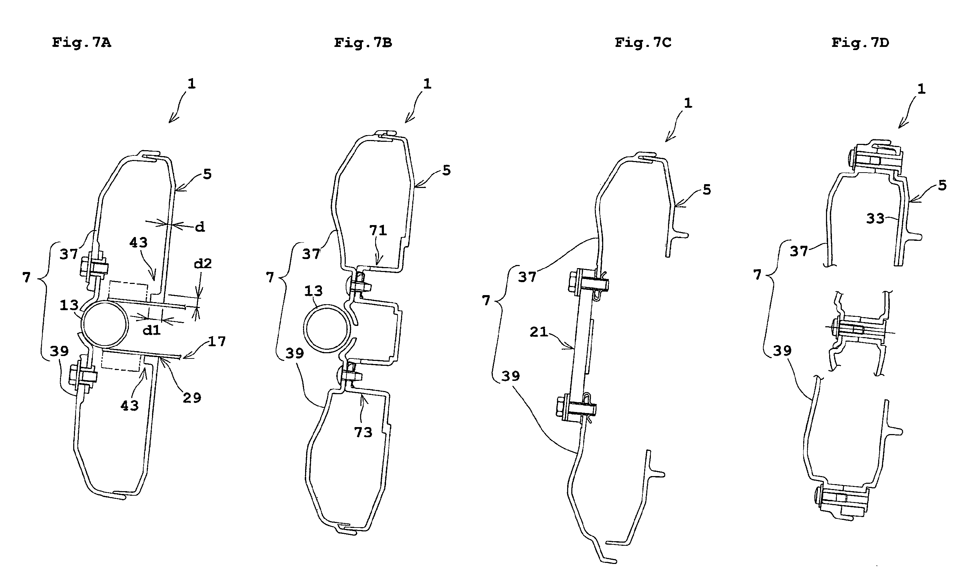

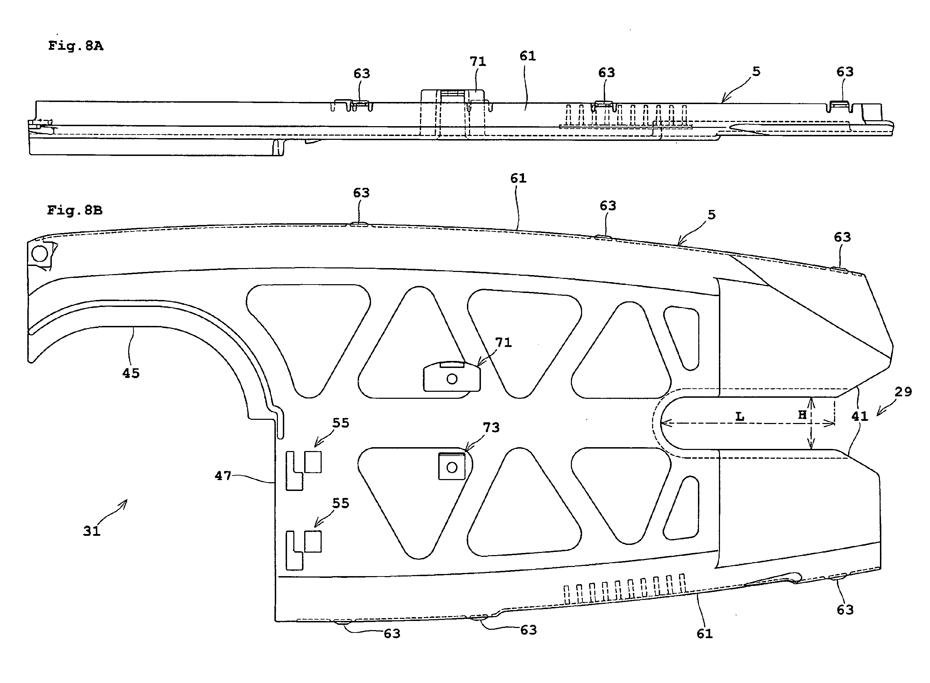

Next, the inner chain case 5 will be described in detail with reference to Figs. 6 - 8. Fig. 6 shows side views of the chain case assembled, in which Fig. 6A is a left side view, and Fig. 6B is a fragmentary right side view. Fig. 7 shows views in vertical section of the chain case of Fig. 6, in which Fig. 7A is a section taken on line 101-101, Fig. 7B is a section taken on line 102-102, Fig. 7C is a section taken on line 103-103, and Fig. 7D is a section taken on line 104-104. Fig. 8 shows the inner chain case, in which Fig. 8A is a plan view, and Fig. 8B is a right side view.

The front cutout 29 of the inner chain case 5 is formed to have an opening height H. This opening height, preferably, is substantially in agreement with a height of a region of the cross member 17 adjacent the left arm portion 13. In other words, the front cutout 29 is formed to have an opening height H for fitting on an upper surface and a lower surface of the cross member 17, so that the inner chain case 5 can be held by the cross member 17 in a way to pinch the latter vertically.

The front cutout 29 is formed to have an opening length L. Preferably, this opening length L is larger than the opening height H, and the front cutout 29 is formed to have a long opening shape in the fore and aft direction. As shown in Fig. 5, in connection with a sectional shape of the cross member 17 including the fore and aft direction and the vertical direction of the two-wheeled motor vehicle, the inner chain case 5 has the front cutout 29 engaging a region of the cross member 17 having a larger size in the fore and aft direction than in the vertical direction.

The inner chain case 5, preferably, includes a guide 41 formed at a forward end of the front cutout 29 (rightward in Fig. 8), which is larger than the opening height H and tapers toward the depth of the front cutout 29 (leftward in Fig. 8). In other words, the front cutout 29 has a guide 41 tapering to the opening height H.

Further, the inner chain case 5, preferably, has the front cutout 29 formed as follows.

Reference is made to Fig. 7A. The inner chain case 5 includes a lateral side formed to have a wall thickness d. The front cutout 29 has edges 43 formed to project toward the outer chain case 7 along the upper surface and lower surface of the cross member 17. The edges 43 have a wall thickness d1 in the transverse direction of the vehicle body larger than the wall thickness d. Further, the edges 43 have a wall thickness d2 in the vertical direction larger than the wall thickness d.

The inner chain case 5, preferably, has the rear cutout 31 formed as follows.

Reference is made to Fig. 8. The rear cutout 31 has an opening 45 formed therein. This opening 45 is formed in order to avoid interference of the hub and axle of the rear wheel 19 with the inner chain case 5. While the inner chain case 5 has the rear cutout 31 formed at the rear end thereof (leftward in Fig. 8), in a lower portion of the rear cutout 31, a forward cutout 47 is formed to extend a large extent forward from the opening 45.

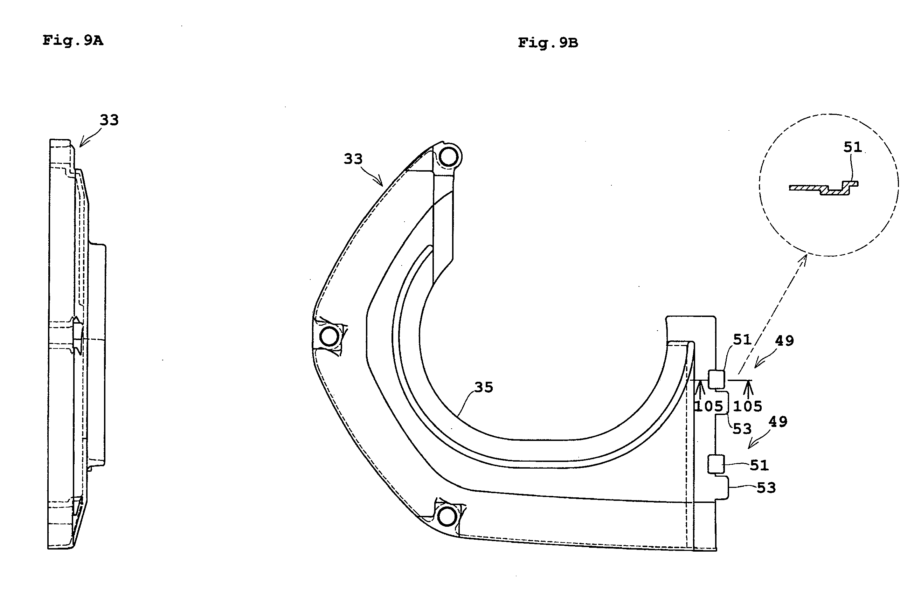

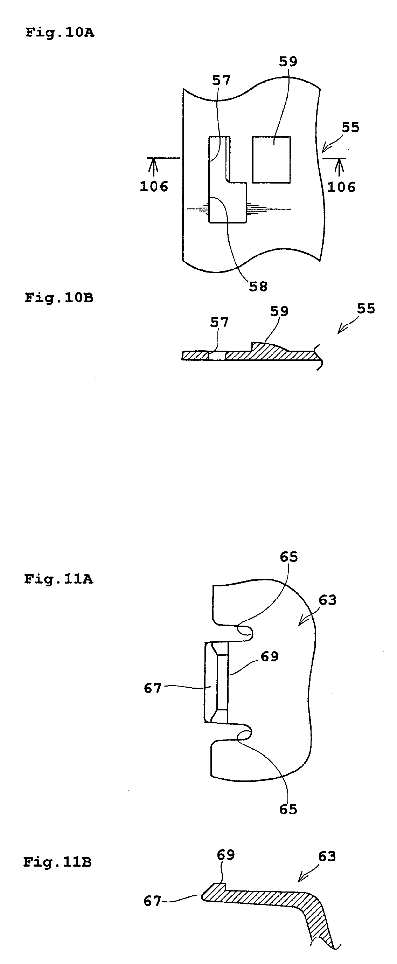

Next, a connecting structure between the inner chain case 5 and rear plate 33 will be described with reference to Figs. 9 and 10. Fig. 9 shows the rear plate, in which Fig. 9A is a rear view, and Fig. 9B is a right side view. Fig. 10 shows a connecting portion of the inner chain case, in which Fig. 10A is a side view, and Fig. 10B is a cross section.

The rear plate 33 includes two connectors 49 formed in positions corresponding to the forward cutout 47 of the inner chain case 5. Each connector 49 has a first boss 51 and a second boss 53, as shown in a section taken on line 105-105. The first boss 51 has a forward end portion raised higher than a side surface of the rear plate 33, and projects forward (rightward in Fig. 9). The second boss 53 has the same height as the side surface of the rear plate 33 and projects forward (rightward in Fig. 9). An interval between the first boss 51 and the second boss 53 substantially corresponds to a wall thickness of the forward cutout 47 of the inner chain case 5.

As shown in Fig. 8, two connectors 55 are formed forward (rightward in Fig. 8) of the forward cutout 47 of the inner chain case 5 to correspond to the above connectors 49. Each connector 55 has engaging holes 57 and 58 and a restricting boss 59. The engaging hole 57 receives the first boss 51 of the connector 49 from an outer surface of the inner chain case 5, and receives the second boss 53 from an inner surface of the inner chain case 5. The restricting boss 59 restricts the first boss 51 against excessive entry. The second boss 53 is inserted into the engaging hole 58 from a position inward of the inner chain case 5 (from adjacent the left arm portion 13).

The rear plate 33 is attached to the rear cutout 31 of the inner chain case 5 by the above connectors 49 and 55.

As shown in Fig. 8, the inner chain case 5 has flanges 61 formed on an upper surface and a lower surface thereof and projecting toward the outer chain case 7. Each flange 61 has lugs 63 in three positions spaced apart on the upper or lower surface. The lugs 63, preferably, are constructed as shown in Fig. 11. Fig. 11 shows a lug of the inner chain case, in which Fig. 11A is a plan view, and Fig. 11B is a view in vertical section.

Each lug 63 includes elongate grooves 65 formed at a predetermined interval in the fore and aft direction of the flange 61, and a locking piece 67 formed between the elongate grooves 65. The locking piece 67 has a ridge 69 formed to project vertically. The locking piece 67 between the elongate grooves 65 can easily make elastic deformation due to the elongate grooves 65 in directions perpendicular to the plane of Fig. 11A and up and down on the plane of Fig. 11B.

The inner chain case 5 has an upper projection 71 and a lower projection 73 formed on the inner surface thereof. Since these are formed on the inner surface of the inner chain case 5, they should be depicted in dotted lines in Fig. 8B. However, they are depicted in solid lines to facilitate visualization. As shown in Figs. 4, 7B and 8B, the upper projection 71 is formed in a position above the left arm portion 13, and opposite the inner surface of the upper outer chain case 37. The lower projection 73 is formed in a position below the left arm portion 13, and opposite the inner surface of the lower outer chain case 39. The upper projection 71 is formed longer than the lower projection 73 in the moving direction (fore and aft direction) of the chain 3. In plan view, the upper projection 71 is formed to project beyond the position of the chain 3 toward the upper outer chain case 37. These projections 71 and 73 have screw holes formed therein opposite the outer chain case 7, and the upper outer chain case 37 and lower outer chain case 39 are joined together by screws. It is preferred that, in plan view, the upper projection 71 is formed in a substantial middle position between the driven sprocket 25 and the axle of rear wheel 19.

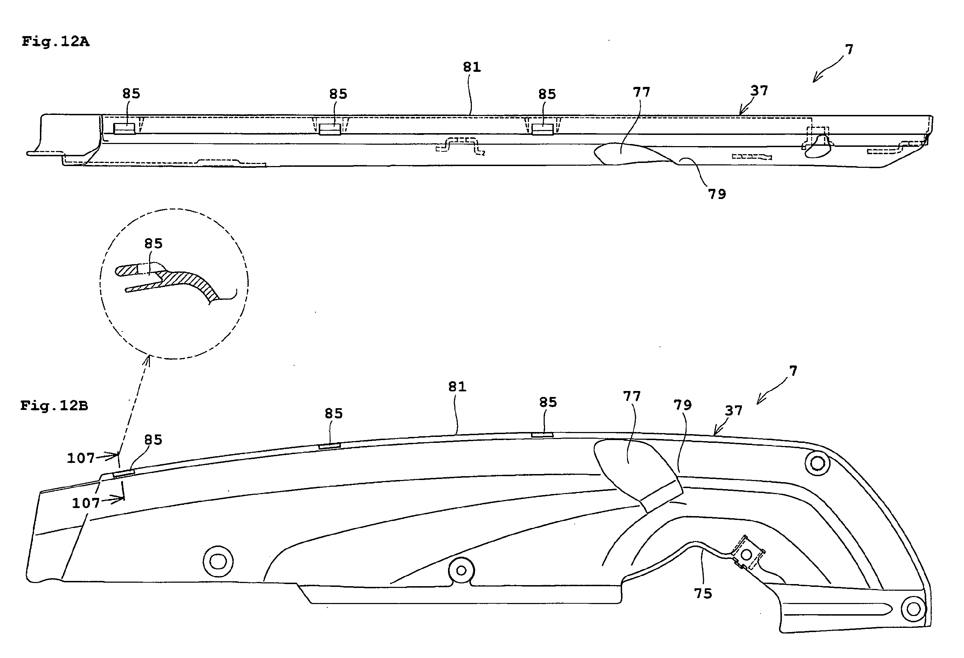

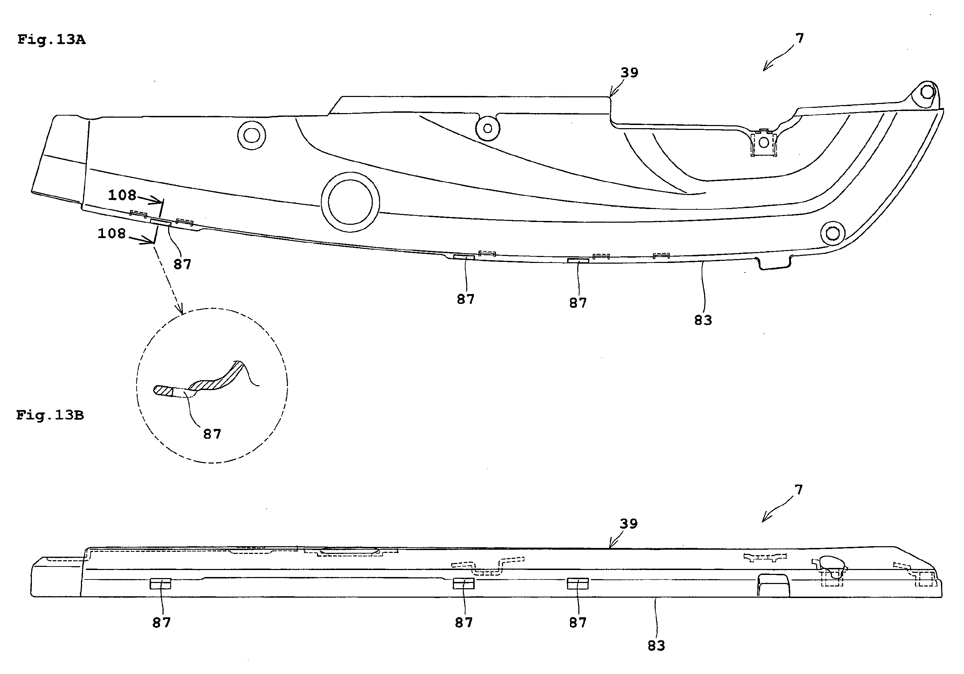

Reference is now made to Figs. 12 and 13. Fig. 12 shows the upper outer chain case, in which Fig. 12A is a plan view, and Fig. 12B is a left side view. Fig. 13 shows the lower outer chain case, in which Fig. 13A is a left side, and Fig. 13B is a bottom view.

The upper outer chain case 37 has an opening recess 75 formed in a rear portion thereof for receiving the mount 21 and chain adjuster 23. The opening recess 75 is open toward the lower outer chain case 39. The upper outer chain case 37 has a recess 77 formed in the outer lateral surface obliquely forward of the opening recess 75. This recess 77 is formed in a forwardly inclined posture toward the axle of rear wheel 19 from above. A buffer not shown is disposed in this recess 77. The upper outer chain case 37 has a projection 79 formed in a position adjacent the recess 77. This projection 79 adjoins a rear end (rightward in Fig. 12B) of the recess 77. In the plan view shown in Fig. 12A, the projection 79 is formed to project outward in the transverse direction of the vehicle body, to a position to render the axle of the rear wheel 19 invisible.

The upper outer chain case 37 has a flange 81 formed at an upper end thereof and projecting toward the inner chain case 5. The lower outer chain case 39 has a flange 83 formed at a lower end thereof and projecting toward the inner chain case 5.

The upper outer chain case 37 has mounting holes 85 formed in positions of the flange 81 corresponding to the upper lugs 63 of the inner chain case 5. The mounting holes 85 are engageable with the ridges 69 of the lugs 63. As shown in the section taken along line 107-107 of Fig. 12B, each mounting hole 85 has a shape to enable die cutting in a direction perpendicular to the plane of Fig. 12B. The lower outer chain case 39 has mounting holes 87 formed in positions of the flange 83 corresponding to the lower lugs 63 of the inner chain case 5. As are the mounting holes 85, the mounting holes 87 are engageable with the ridges 69 of the lugs 63. Each mounting hole 87 also has a shape enabling die cutting in a direction perpendicular to the plane of Fig. 13A.

In the chain case 1 according to this embodiment described above, the inner chain case 5 has the rear cutout 31, and the rear plate 33 in the rear cutout 31. When changing the rear wheel 19, as shown in Fig. 5, the operation can be carried out only by removing the outer chain case 7 and rear cutout 31, without removing the inner chain case 5, and without the driven sprocket 25 attached to the rear wheel 19 interfering with the inner chain case 5. When attaching the chain case 1 to the two-wheeled motor vehicle, as shown in Fig. 5, the operation can be carried out in the state of the front cutout 29 of the inner chain case 5 attached to the cross member 17 of the swing arm 9. Therefore, the operations can be carried out efficiently to change the rear wheel 19 easily with no need to support the inner chain case 5.

In the chain case 1 according to this embodiment, the front cutout 29 has the opening height H for fitting on the upper surface and lower surface of the cross member 17. Thus, the inner chain case 5 can be held by the cross member 17 in a way to pinch the latter. Further, the front cutout 29 is elongated in the fore and aft direction in accordance with the sectional shape of the cross member 17. Therefore, the inner chain case 5 can stably be held by the cross member 17 when the latter is pinched by the inner chain case 5. The edges 43 of the front cutout 29 have a wall thickness d1 in the transverse direction of the vehicle body larger than the wall thickness d of the lateral side. Therefore, the inner chain case 5 can be attached stably to the cross member 17. The edges 43 of the front cutout 29 have a wall thickness d2 in the vertical direction larger than the wall thickness d of the side surface. Therefore, the edges 43 have increased rigidity, whereby the inner chain case 5 can be attached stably to the cross member 17.

In the chain case 1 according to this embodiment, the inner chain case 5 has the guide 41, whereby the front cutout 29 of the inner chain case 5 can easily fit onto the cross member 17. This improves working efficiency in attaching the inner chain case 5.

Further, the chain case 1 according to this embodiment has the opening 45 in a rear portion thereof for avoiding interference with the rear wheel 19. The rear cutout 31 has the forward cutout 47 formed to extend a large extent forward from the opening 45. Generally, the rear wheel of a two-wheeled motor vehicle is constructed such that, when the chain 3 has become extended, the axle of the rear wheel 19 is moved in the fore and aft direction so that a slack of the chain 3 can be adjusted with the chain adjuster 23 to be at a tolerance level. That is, the axle of the rear wheel 19 can move in the fore and aft direction through the mount 21 of the left arm portion 13. Therefore, when such operation is carried out, as when changing the rear wheel 19, a large working space is required for moving the rear wheel 19 in the fore and aft direction of the swing arm 9. Such large working space is secured since the rear cutout 31 of the inner chain case 5 has the forward cutout 47 extending a large extent forward of the opening 45. Therefore, operations can carried out efficiently for tightening the chain 3 and for changing the rear wheel 19.

The chain case 1 according to this embodiment has the recess 77 formed in the upper outer chain case 37. Therefore, the buffer not shown can be allocated easily. The projection 79 formed adjacent the recess 77 of the upper outer chain case 37 projects outward so that the axle of the rear wheel 19 may be invisible when the upper outer chain case 37 is seen vertically. Therefore, the upper outer chain case 37 cannot be manufactured by die cutting in a direction along the plane, but can be manufactured by a technique of die cutting in a direction perpendicular to the plane.

In the chain case 1 according to this embodiment, the outer chain case 7 has a two-piece construction consisting of the upper outer chain case 37 and lower outer chain case 39. Thus, a state of the chain 3 or the driven sprocket 25, for example, can be checked only by removing the upper outer chain case 37 or lower outer chain case 39.

The inner chain case 5 has lugs 63 formed on the flange 61, the upper outer chain case 37 has mounting holes 85 formed in the flange 81, and the lower outer chain case 39 has mounting holes 87 in the flange 83. These lugs 63 and mounting holes 85 and 87 allow the inner chain case 5 and outer chain case 7 to be fixed easily together. The outer chain case 7 can be fixed reliably to the inner chain case 5 by screwing through the upper projection 71 and lower projection 73 of the inner chain case 5.

The upper projection 71 is contactable by the chain 3 when the vehicle is braked with the engine in a slack state of the chain 3. There is a known construction in which, when the chain 3 slackens, its lower portion contacts a contact portion provided in a lower part of the chain case, and produces abnormal noise. However, engine sound is loud at the time of acceleration, and there is a possibility that the rider fails to hear the noise. When the vehicle is braked with the engine, the upper projection 71 (contact portion) is contacted by an upper portion of the chain 3 to produce abnormal noise. At the time of engine braking, engine sound is small compared with the time of acceleration, and the rider tends to notice the noise easily. Thus, the rider can determine appropriately a maintenance time due to slacking of the chain 3. Since the upper projection 71 is disposed in a position corresponding substantial to the middle of the chain 3 in plan view, slackening of the chain 3 can be detected early.

### <Two-wheeled motor vehicle>

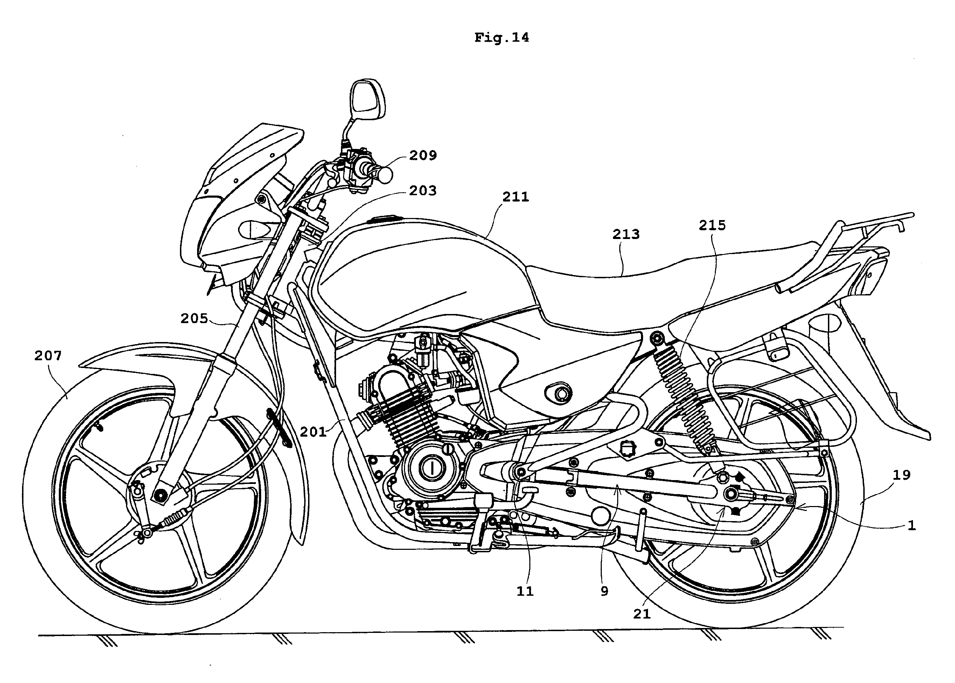

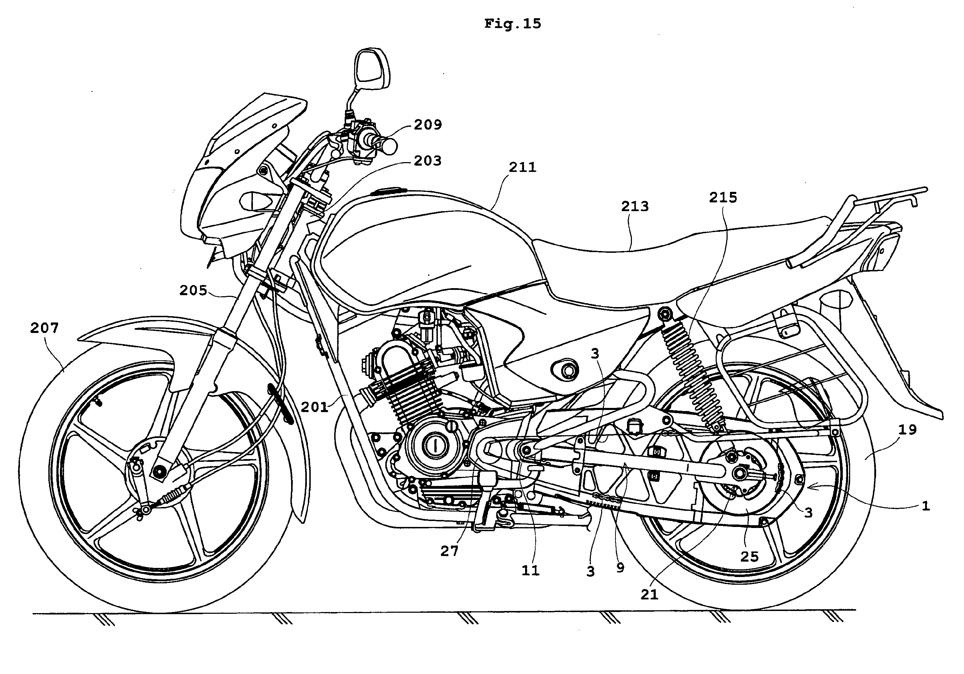

The two-wheeled motor vehicle having the above chain case 1 will be described with reference to Figs. 14 and 15. Fig. 14 is a left side view of the two-wheeled motor vehicle having the chain case according to the invention. Fig. 15 is a left side view of the two-wheeled motor vehicle with the outer chain case of the chain case removed.

A main frame 201 has a head tube 203 disposed in a front end portion thereof. A front fork 205 is attached to the head tube 203 to be swingable right and left. A front wheel 207 is rotatably attached to the lower end of the front fork 205. A steering handle 209 is attached to the upper end of the head tube 203.

A fuel tank 211 is mounted on the main frame 201 rearward of the steering handle 209, and a seat 213 mounted further rearward. The swing arm 9 is attached to the main frame 201 below the seat 213 to be swingable relative to the main frame 201. The rear wheel 19 is rotatably attached along with the driven sprocket 25 to the rear end of the swing arm 9. A buffer 215 is provided for the mount 21 at the rear end of the swing arm 9 to extend between the main frame 201 and swing arm 9.

The above two-wheeled motor vehicle has the chain case 1 of the right and left split type which facilitates an operation for changing the rear wheel 19 having the driven sprocket 25.

The present invention is not limited to the foregoing embodiment, but may be modified as follows:
(1) In the foregoing embodiment, the outer chain case 7 of the chain case 1 has a two-piece construction. The invention is not limited to such construction. For example, the outer chain case 7 may have a one-piece construction or a construction consisting of three or more pieces.
(2) The foregoing embodiment employs the construction having the front cutout 29 formed in the inner chain case 5 of the chain case 1 to fit on the cross member 17 for support. The invention is not limited to such construction. The inner chain case 5 may be attached to the cross member 17 by screws. The guide 41 is not indispensable, but may be omitted.
(3) In the foregoing embodiment, the edges 43 of the front cutout 29 are formed to project only toward the outer chain case 7. However, the edges 43 may project only in the direction away from the outer chain case 7. In these cases, the construction is simple and can be manufactured easily. The edges 43 may project both toward and away from the outer chain case 7. In this case, the front cutout 29 can be given increased rigidity.
(4) In the foregoing embodiment, the inner chain case 5 and outer chain case 7 are fixed to each other by the lugs 63 and mounting holes 85 and 87. The invention is not limited to such construction, but the cases 5 and 7 may fixed by screws. Although the inner chain case 5 has the lugs 63 and the outer chain case 7 has the mounting holes 85 and 87, the inner chain case 5 may have mounting holes and the outer chain case 7 lugs.
(5) In the foregoing embodiment, the chain case 1 has the recess 77 for avoiding interference with the buffer 215. Such recess is not essential to the present invention.
(6) In the foregoing embodiment, the inner chain case 5 of the chain case 1 has the upper projection 71 for detecting slacking of the chain 3. Such construction is not essential to the present invention.
(7) In the foregoing embodiment, the chain case 1 is formed of resin. Instead, the chain case 1 may be formed of metal.

The present invention may be embodied in other specific forms without departing from the appended claims, rather than to the foregoing specification, as indicating the scope of the invention.

## Claims

1. A two-wheeled motor vehicle having a chain case (1) for covering a chain (3) which transmits power of the two-wheeled motor vehicle to a rear wheel (19), the chain case (1) being attached to a swing arm (9) supported by a pivot (11) to be swingable relative to a frame (201), the chain case (1) comprising:
an inner chain case (5) attached inwardly, in a transverse direction of the vehicle, of a chain-side one, located on a driven sprocket side of the rear wheel (19), of a left arm portion (13) and a right arm portion (15) of the swing arm (9), the inner chain case having a front cutout (29) formed in a front portion thereof for attachment to a cross member (17) connecting the left arm portion (13) and the right arm portion (15) in a position adjacent the pivot (11); and
an outer chain case (7) detachable attached to the inner chain case (5) from outside in the transverse direction of the vehicle to cover the chain (3),
**characterized in that** the inner chain case (5) comprises
a rear cutout (31) formed by cutting away a lower and rearward portion corresponding to a region of the swing arm (9) where the rear wheel (19) is attached, the rear cutout (31) further having an opening (45) formed therein in order to avoid interference of the hub and axle of the rear wheel with the inner chain case (5), and
a rear plate (33) detachable mounted in the rear cutout (31) allowing to change the rear wheel (19) by removing the outer chain case (7) and the rear plate (33) without removing the inner chain case (5).

2. The two-wheeled motor vehicle according to claim 1, **characterized in that** the front cutout (29) has an opening height for holding an upper surface and a lower surface of the cross member (17) in a pinching manner.

3. The two-wheeled motor vehicle according to claim 1, **characterized in that**, in connection with a sectional shape of the cross member (17) including a fore and aft direction and a vertical direction of the two-wheeled motor vehicle, the front cutout (29) engages a region of the cross member (17) having a larger size in the fore and aft direction than in the vertical direction, and has a size in the fore and aft direction larger than the opening height.

4. The two-wheeled motor vehicle according to any one of claims 1 to 3, **characterized in that** the front cutout (29) has edges formed on a side surface of the inner chain case (5) along the upper surface and the lower surface of the cross member (17); and
the edges have a size in the transverse direction larger than a wall thickness of the side surface of the inner chain case (5).

5. The two-wheeled motor vehicle according to claim 4, **characterized in that** the edges project only toward the outer chain case (7) and/or **in that** the edges have a size in the vertical direction larger than the wall thickness of the side surface of the inner chain case (5).

6. The two-wheeled motor vehicle according to any one of claims 1 to 5, **characterized in that** the front cutout (29) has a guide (41) having a large forward end and tapering toward the opening height.

7. The two-wheeled motor vehicle according to any one of claims 1 to 6, **characterized in that** the rear cutout (31) has a forward cutout formed to extend a large extent forward from the opening (45).

8. The two-wheeled motor vehicle according to any one of claims I to 7, **characterized in that** the outer chain case (7) has a recess (77) formed in a transversely outer surface thereof for avoiding interference with an on-board component (215) disposed adjacent thereto.

9. The two-wheeled motor vehicle according to claim 8, **characterized in that** the outer chain case (7) has a projection (79) formed on the transversely outer surface thereof adjacent the recess (77), the projection (79) being formed to project outward in the transverse direction of the vehicle to a position to render an axle of the rear wheel invisible when the outer chain case (7) is seen from a vertical direction.

10. The two-wheeled motor vehicle according to claim 8 or 9, **characterized in that** the on-board component (215) is a buffer extending between the chain-side arm portion and the frame, and the recess (77) is formed in an upper portion of the outer chain case (7).

11. The two-wheeled motor vehicle according to any one of claims 1 to 9, **characterized in that** the outer chain case (7) includes an upper outer chain case (37) located mainly above the chain-side arm portion, and a lower outer chain case (39) located mainly below the chain-side arm portion.

12. The two-wheeled motor vehicle according to any one of claims 1 to 11, **characterized in that**:
the inner chain case (5) and the outer chain case (7) are formed of resin;
the inner chain case (5) has flanges (61) extending from an upper portion and a lower portion thereof toward the outer chain case (7);
the outer chain case (7) has flanges (81) extending from an upper portion and a lower portion thereof toward the inner chain case (5);
the flanges (61,81) of one of the inner chain case (5) and the outer chain case (7) have a plurality of mounting holes (85, 87); and
the flanges (61, 81) of the other of the inner chain case (5) and the outer chain case (7) have a plurality of lugs (63) inserted into the mounting holes (85, 87) to fix the inner chain case (5) and the outer chain case (7) to each other.

13. The two-wheeled motor vehicle according to any one of claims 1 to 12, **characterized in that**:
the inner chain case (5) has an upper projection (71) formed in a position thereof above the chain-side arm portion and opposed to an inner surface of the outer chain case (7) to project toward the outer chain case (7);
the inner chain case (5) has a lower projection (73) formed in a position thereof below the chain-side arm portion and opposed to the inner surface of the outer chain case (7) to project toward the outer chain case (7); and
the outer chain case (7) is fixed by screws to the upper projection (71) and the lower projection (73).

14. The two-wheeled motor vehicle according to claim 13, **characterized in that** the upper projection (71) is formed longer than the lower projection (73) in a moving direction of the chain (3), and is formed to project beyond a position of the chain (3) toward the upper outer chain case (5) and/or **in that** the upper projection (71) is formed in a substantial middle position between a driven sprocket and the axle of the rear wheel.

## Patentansprüche

1. Ein zweirädriges Kraftfahrzeug, das ein Kettengehäuse (1) zum Abdecken einer Kette (3) aufweist, die Leistung des zweirädrigen Kraftfahrzeugs auf ein Hinterrad (19) überträgt, wobei das Kettengehäuse (1) an einem Schwingarm (9) befestigt ist, der von einem Drehpunkt (11) getragen wird, um relativ zu einem Rahmen (201) schwingbar zu sein, wobei das Kettengehäuse (1) folgende Merkmale aufweist:
ein inneres Kettengehäuse (5), das in einer Querrichtung des Fahrzeugs bezüglich einer Kettenseite eines linken Armabschnitts (13) oder eines rechten Armabschnitts (15) des Schwingarms (9), der auf einer Seite des angetriebenen Kettenzahnrads des Hinterrades (19) angeordnet ist, innenseitig befestigt ist, wobei das innere Kettengehäuse einen vorderen Ausschnitt (29) aufweist, der in einem vorderen Abschnitt desselben zur Befestigung an einem Querträger (7), der den linken Armabschnitt (13) und den rechten Armabschnitt (15) in einer neben dem Drehpunkt (11) befindlichen Position verbindet, gebildet ist; und
ein äußeres Kettengehäuse (7), das in der Querrichtung des Fahrzeugs lösbar von außen an dem inneren Kettengehäuse (5) befestigt ist, um die Kette (3) abzudecken,
**dadurch gekennzeichnet, dass** das innere Kettengehäuse (5) Folgendes aufweist:
einen hinteren Ausschnitt (31), der durch Abschneiden eines unteren und hinteren Abschnitts gebildet wird, der einer Region des Schwingarms (9) entspricht, in der das Hinterrad (19) befestigt ist, wobei der hintere Ausschnitt (31) ferner eine in demselben gebildete Öffnung (45) aufweist, um eine gegenseitige Beeinträchtigung zwischen der Nabe und Achse des Hinterrades und dem inneren Kettengehäuse (5) zu vermeiden, und
eine Rückplatte (33), die lösbar in dem hinteren Ausschnitt (31) angebracht ist und die ein Wechseln des Hinterrades (19) ermöglicht, indem das äußere Kettengehäuse (7) und die Rückplatte (33) entfernt werden, ohne das innere Kettengehäuse (5) zu entfernen.

2. Das zweirädrige Kraftfahrzeug gemäß Anspruch 1, **dadurch gekennzeichnet, dass** der vordere Ausschnitt (29) eine Öffnungshöhe zum Halten einer oberen Oberfläche und einer unteren Oberfläche des Querträgers (17) auf klemmende Weise aufweist.

3. Das zweirädrige Kraftfahrzeug gemäß Anspruch 1, **dadurch gekennzeichnet, dass** in Verbindung mit einer Querschnittsform des Querträgers (17), die eine von vorne nach hinten verlaufende Richtung und eine vertikale Richtung des zweirädrigen Kraftfahrzeugs umfasst, der vordere Ausschnitt (29) eine Region des Querträgers (17) in Eingriff nimmt, die in der von vorne nach hinten verlaufenden Richtung eine größere Größe aufweist als in der vertikalen Richtung und in der vorne nach hinten verlaufenden Richtung eine größere Größe aufweist als die Öffnungshöhe.

4. Das zweirädrige Kraftfahrzeug gemäß einem der Ansprüche 1 bis 3, **dadurch gekennzeichnet, dass** der vordere Ausschnitt (29) Kanten aufweist, die auf einer Seitenoberfläche des inneren Kettengehäuses (5) entlang der oberen Oberfläche und der unteren Oberfläche des Querträgers (17) gebildet sind; und
die Kanten in der Querrichtung eine Größe aufweisen, die größer ist als eine Wanddicke der Seitenoberfläche des inneren Kettengehäuses (5).

5. Das zweirädrige Kraftfahrzeug gemäß Anspruch 4, **dadurch gekennzeichnet, dass** die Kanten lediglich zu dem äußeren Kettengehäuse (7) hin vorstehen und/oder dadurch, dass die Kanten eine Größe aufweisen, die in der vertikalen Richtung größer ist als die Wanddicke der Seitenoberfläche des inneren Kettengehäuses (5).

6. Das zweirädrige Kraftfahrzeug gemäß einem der Ansprüche 1 bis 5, **dadurch gekennzeichnet, dass** der vordere Ausschnitt (29) eine Führung (41) aufweist, die ein großes vorderes Ende aufweist und sich zu der Öffnungshöhe hin verjüngt.

7. Das zweirädrige Kraftfahrzeug gemäß einem der Ansprüche 1 bis 6, **dadurch gekennzeichnet, dass** der hintere Ausschnitt (31) einen vorwärts gerichteten Ausschnitt aufweist, der dahin gehend gebildet ist, sich von der Öffnung (45) aus weit vorwärts zu erstrecken.

8. Das zweirädrige Kraftfahrzeug gemäß einem der Ansprüche 1 bis 7, **dadurch gekennzeichnet, dass** das äußere Kettengehäuse (7) eine Ausnehmung (77) aufweist, die in einer in Querrichtung betrachtet außen liegenden Oberfläche desselben gebildet ist, um eine gegenseitige Beeinträchtigung mit einer dazu benachbart angeordneten eingebauten Komponente (215) zu vermeiden.

9. Das zweirädrige Kraftfahrzeug gemäß Anspruch 8, **dadurch gekennzeichnet, dass** das äußere Kettengehäuse (7) einen Vorsprung (79) aufweist, der auf der in Querrichtung betrachtet außen liegenden Oberfläche desselben neben der Ausnehmung (77) gebildet ist, wobei der Vorsprung (79) dazu gebildet ist, in der Querrichtung des Fahrzeugs nach außen zu einer Position vorzuspringen, um eine Achse des Hinterrades unsichtbar zu machen, wenn das äußere Kettengehäuse (7) aus einer vertikalen Richtung betrachtet wird.

10. Das zweirädrige Kraftfahrzeug gemäß Anspruch 8 oder 9, **dadurch gekennzeichnet, dass** die eingebaute Komponente (215) ein Puffer ist, der sich zwischen dem kettenseitigen Armabschnitt und dem Rahmen erstreckt, und die Ausnehmung (77) in einem oberen Abschnitt des äußeren Kettengehäuses (7) gebildet ist.

11. Das zweirädrige Kraftfahrzeug gemäß einem der Ansprüche 1 bis 9, **dadurch gekennzeichnet, dass** das äußere Kettengehäuse (7) ein oberes äußeres Kettengehäuse (37), das hauptsächlich über dem kettenseitigen Armabschnitt angeordnet ist, und ein unteres äußeres Kettengehäuse (39), das hauptsächlich unter dem kettenseitigen Armabschnitt angeordnet, umfasst.

12. Das zweirädrige Kraftfahrzeug gemäß einem der Ansprüche 1 bis 11, **dadurch gekennzeichnet, dass**:
das innere Kettengehäuse (5) und das äußere Kettengehäuse (7) aus Harz gebildet sind;
das innere Kettengehäuse (5) Flansche (61) aufweist, die sich von einem oberen Abschnitt und einem unteren Abschnitt desselben zu dem äußeren Kettengehäuse (7) hin erstrecken;
das äußere Kettengehäuse (7) Flansche (81) aufweist, die sich von einem oberen Abschnitt und einem unteren Abschnitt desselben zu dem inneren Kettengehäuse (5) hin erstrecken;
die Flansche (61, 81) eines des inneren Kettengehäuses (5) und des äußeren Kettengehäuses (7) eine Mehrzahl von Montagelöchern (85, 87) aufweisen; und
die Flansche (61, 81) des anderen des inneren Kettengehäuses (5) und des äußeren Kettengehäuses (7) eine Mehrzahl von Nasen (63) aufweisen, die in die Montagelöcher (85, 87) eingefügt sind, um das innere Kettengehäuse (5) und das äußere Kettengehäuse (7) aneinander zu befestigen.

13. Das zweirädrige Kraftfahrzeug gemäß einem der Ansprüche 1 bis 12, **dadurch gekennzeichnet, dass**:
das innere Kettengehäuse (5) einen oberen Vorsprung (71) aufweist, der in einer Position desselben gebildet ist, die über dem kettenseitigen Armabschnitt liegt und die einer Innenoberfläche des äußeren Kettengehäuses (7) gegenüberliegt, um zu dem äußeren Kettengehäuse (7) hin vorzuspringen;
das innere Kettengehäuse (5) einen unteren Vorsprung (73) aufweist, der in einer Position desselben gebildet ist, die unter dem kettenseitigen Armabschnitt liegt und die der Innenoberfläche des äußeren Kettengehäuses (7) gegenüberliegt, um zu dem äußeren Kettengehäuse (7) hin vorzuspringen; und
das äußere Kettengehäuse (7) mittels Schrauben an dem oberen Vorsprung (71) und dem unteren Vorsprung (73) befestigt ist.

14. Das zweirädrige Kraftfahrzeug gemäß Anspruch 13, **dadurch gekennzeichnet, dass** der obere Vorsprung (71) in einer Bewegungsrichtung der Kette (3) länger ausgebildet ist als der untere Vorsprung (73) und dahin gehend gebildet ist, über eine Position der Kette (3) hinaus zu dem oberen äußeren Kettengehäuse (5) hin vorzuspringen, und/oder dadurch, dass der obere Abschnitt (71) in einer im Wesentlichen mittig gelegenen Position zwischen einem angetriebenen Kettenzahnrad und der Achse des Hinterrades gebildet ist.

## Revendications

1. Véhicule à moteur à deux roues présentant un carter de chaîne (1) destiné à recouvrir une chaîne (3) qui transmet de l'énergie du véhicule à moteur à deux roues à une roue arrière (19), le carter de chaîne (1) étant fixé à un bras pivotant (9) supporté par un pivot (11) de manière à pouvoir pivoter par rapport à un châssis (201), le carter de chaîne (1) comprenant:
un carter de chaîne intérieur (5) fixé vers l'intérieur, dans une direction transversale du véhicule, d'un côté de la chaîne, situé d'un côté du pignon entraîné de la roue arrière (19), d'une partie de bras gauche (13) et d'une partie de bras droite (15) du bras pivotant (9), le carter de chaîne intérieur présentant une découpe avant (29) formée dans une partie avant de ce dernier pour la fixation à un élément transversal (17) reliant la partie de bras gauche (13) et la partie de bras droite (15) dans une position adjacente au pivot (11); et
un carter de chaîne extérieur (7) fixé de manière amovible au carter de chaîne intérieur (5) depuis l'extérieur dans la direction transversale du véhicule, pour recouvrir la chaîne (3),
**caractérisé par le fait que** le carter de chaîne intérieur (5) comprend
une découpe arrière (31) formée par découpage d'une partie inférieure et arrière correspondant à une région du bras pivotant (9) où est fixée la roue arrière (19), la découpe arrière (31) présentant par ailleurs une ouverture (45) y formée pour éviter une interférence du moyeu et de l'essieu de la roue arrière avec le carter de chaîne intérieur (5), et
une plaque arrière (33) montée de manière amovible dans la découpe arrière (31) permettant de remplacer la roue arrière (19) en retirant le carter de chaîne extérieur (7) et la plaque arrière (33) sans retirer le carter de chaîne intérieur (5).

2. Véhicule à moteur à deux roues selon la revendication 1, **caractérisé par le fait que** la découpe avant (29) présente une hauteur d'ouverture pour maintenir une surface supérieure et une surface inférieure de l'élément transversal (17) par pincement.

3. Véhicule à moteur à deux roues selon la revendication 1, **caractérisé par le fait que**, en rapport avec une forme de section de l'élément transversal (17) comportant une direction avant-arrière et une direction verticale du véhicule à moteur à deux roues, la découpe avant (29) vient en prise avec une région de l'élément transversal (17) présentant une plus grande grandeur dans la direction avant-arrière que dans la direction verticale, et présente une grandeur dans la direction avant-arrière plus grande que la hauteur d'ouverture.

4. Véhicule à moteur à deux roues selon l'une quelconque des revendications 1 à 3, **caractérisé par le fait que** la découpe avant (29) présente des bords formés sur une surface latérale du carter de chaîne intérieur (5) le long de la surface supérieure et de la surface inférieure de l'élément transversal (17); et
les bords présentent une grandeur dans la direction transversale plus grande qu'une épaisseur de paroi de la surface latérale du carter de chaîne intérieur (5).

5. Véhicule à moteur à deux roues selon la revendication 4, **caractérisé par le fait que** les bords ne ressortent que vers le carter de chaîne extérieur (7) et/ou que les bords présentent une grandeur dans la direction verticale plus grande que l'épaisseur de paroi de la surface latérale du carter de chaîne intérieur (5).

6. Véhicule à moteur à deux roues selon l'une quelconque des revendications 1 à 5, **caractérisé par le fait que** la découpe avant (29) présente un guide (41) présentant une grande extrémité avant et s'effilant vers la hauteur d'ouverture.

7. Véhicule à moteur à deux roues selon l'une quelconque des revendications 1 à 6, **caractérisé par le fait que** la découpe arrière (31) présente une découpe avant formée de manière à s'étendre dans une grande mesure vers l'avant à partir de l'ouverture (45).

8. Véhicule à moteur à deux roues selon l'une quelconque des revendications 1 à 7, **caractérisé par le fait que** le carter de chaîne extérieur (7) présente un évidement (77) formé dans une surface transversalement extérieure de celui-ci pour éviter une interférence avec un élément à bord (215) disposé adjacent à cette dernière.

9. Véhicule à moteur à deux roues selon la revendication 8, **caractérisé par le fait que** le carter de chaîne extérieur (7) présente une saillie (79) formée sur la surface transversalement extérieure de celui-ci adjacente à l'évidement (77), la saillie (79) étant formée de manière à faire saillie vers l'extérieur dans la direction transversale du véhicule vers une position pour rendre invisible un essieu de la roue arrière lorsque le carter de chaîne extérieur (7) est vu depuis une direction verticale.

10. Véhicule à moteur à deux roues selon la revendication 8 ou 9, **caractérisé par le fait que** l'élément à bord (215) est un tampon s'étendant entre la partie de bras du côté de la chaîne et le châssis, et l'évidement (77) est formé dans une partie supérieure du carter de chaîne extérieur (7).

11. Véhicule à moteur à deux roues selon l'une quelconque des revendications 1 à 9, **caractérisé par le fait que** le carter de chaîne extérieur (7) comporte un carter de chaîne extérieur supérieur (37) situé principalement au-dessus de la partie de bras du côté de la chaîne, et un carter de chaîne extérieur inférieur (39) situé principalement au-dessous de la partie de bras du côté de la chaîne.

12. Véhicule à moteur à deux roues selon l'une quelconque des revendications 1 à 11, **caractérisé par le fait que**:
le carter de chaîne intérieur (5) et le carter de chaîne extérieur (7) sont réalisés en résine;
le carter de chaîne intérieur (5) présente des rebords (61) s'étendant d'une partie supérieure et d'une partie inférieure de ce dernier en direction du carter de chaîne extérieur (7);
le cartier de chaîne extérieur (7) présente des rebords (81) s'étendant d'une partie supérieure et d'une partie inférieure de ce dernier vers le carter de chaîne intérieur (5);
les rebords (61, 81) de l'un parmi le carter de chaîne intérieur (5) et le carter de chaîne extérieur (7) présentent une pluralité de trous de montage (85, 87); et
les rebords (61, 81) de l'autre parmi le carter de chaîne intérieur (5) et le carter de chaîne extérieur (7) présentent une pluralité de pattes (63) insérées dans les trous de montage (85, 87) pour fixer l'un à l'autre le carter de chaîne intérieur (5) et le carter de chaîne extérieur (7).

13. Véhicule à moteur à deux roues selon l'une quelconque des revendications 1 à 12, **caractérisé par le fait que**:
le carter de chaîne intérieur (5) présente une saillie supérieure (71) formée dans une position de celui-ci au-dessus de la partie de bras du côté de la chaîne et opposée à une surface intérieure du carter de chaîne extérieur (7) de manière à faire saillie vers le carter de chaîne extérieur (7);
le carter de chaîne intérieur (5) présente une saillie inférieure (73) formée dans une position de celui-ci au-dessous de la partie de bras du côté de la chaîne et opposée à la surface intérieure du carter de chaîne extérieur (7) de manière à faire saillie vers le carter de chaîne extérieur (7); et
le carter de chaîne extérieur (7) est fixé par des vis à la saillie supérieure (71) et à la saillie inférieure (73).

14. Véhicule à moteur à deux roues selon la revendication 13, **caractérisé par le fait que** la saillie supérieure (71) est formée plus longue que la saillie inférieure (73) dans une direction de déplacement de la chaîne (3), et est formée de manière à faire saillie au-delà d'une position de la chaîne (3) vers le carter de chaîne extérieur supérieure (5) et/ou que la saillie supérieure (71) est formée en une position sensiblement centrale entre un pignon entraîné et l'essieu de la roue arrière.
